# FASCICULE DE BREVET EUROPEEN

(11) **EP 2 162 317 B1**
(45) Date de publication et mention de la délivrance du brevet: **11.06.2014**
(21) Numéro de dépôt: 08806135.3
(22) Date de dépôt: 01.07.2008
(51) Int. Cl.: B60R 16/04

(54) **AGENCEMENT POUR LE MONTAGE D'UNE BATTERIE DANS UN VEHICULE AUTOMOBILE**
ANORDNUNG ZUR MONTAGE EINER BATTERIE IN EINEM KRAFTFAHRZEUG
ARRANGEMENT FOR MOUNTING A BATTERY IN A MOTOR VEHICLE

(30) Priorité: 09.07.2007 FR 0756332
(43) Date de publication de la demande: 17.03.2010
(73) Titulaire: Renault S.A.S., 92100 Boulogne-Billancourt (FR)
(72) Inventeur: MOINE-PICARD, Thierry, F-78870 Bailly (FR); MULLARD, Stéphane, F-78560 Le Port Marly (FR); JOSSE, Stéphane, F-78320 Le Mesnil Saint Denis (FR)
(86) Numéro de dépôt international: PCT/FR2008/051211
(87) Numéro de publication internationale: WO 2009/007632

(56) Documents cités:
- EP-A- 1 182 092
- EP-A- 1 308 335
- US-A- 3 821 996
- US-A- 5 115 116

## Description

La présente invention concerne un agencement pour le montage d'une batterie dans un véhicule automobile. L'invention concerne plus particulièrement un agencement pour le montage d'une batterie d'accumulateurs dans un véhicule automobile qui comporte une première partie de structure de caisse formant compartiment moteur, du type dans lequel la partie de structure comporte au moins deux longerons sensiblement longitudinaux et parallèles et qui est agencé en arrière d'une partie de structure transversale formant bouclier avant du véhicule, du type dans lequel la structure transversale comporte au mois une traverse avant reliée aux longerons et supportant à ses extrémités un organe de projection dont les ampoules sont accessibles depuis le compartiment moteur par au moins une ouverture et dans lequel un support accueillant la batterie d'accumulateurs est situé en arrière de cette ouverture.

### ETAT DE LA TECHNIQUE :

On connaît de nombreux exemples d'agencements de ce type. Dans la plupart de ces agencements la batterie est fixée rigidement au support qui la porte. Une batterie conventionnelle est souvent montée dans un logement étanche dans lequel un courant d'air est réalisé de façon à refroidir la batterie elle-même. La forme de ce logement est de forme parallélépipédique et son étanchéité est par l'ajout d'un capot venant fermer le dessus du logement. C'est le cas notamment du document EP 1 182 092.

Dans le compartiment moteur d'un véhicule automobile, la batterie d'accumulateurs et son logement se situent généralement derrière l'organe d'éclairage. Cet organe d'éclairage comporte l'ensemble des feux de signalisation du véhicule et nécessite régulièrement un changement des ampoules défectueuses des feux de signalisation. La proximité de l'organe d'éclairage et du logement de la batterie empêche souvent l'utilisateur d'y accéder facilement. En effet, l'encombrement du compartiment moteur contraint l'utilisateur à utiliser un outillage spécifique pour démonter l'organe se trouvant juste derrière l'organe d'éclairage ou à aller chez un garagiste pour effectuer la réparation, ce qui rend l'opération très coûteuse.

### EXPOSE DE L'INVENTION :

Pour remédier à ces inconvénients, l'invention propose un agencement du type précédemment décrit qui permet, dans le cas où une ampoule de l'organe de projection est à changer, à l'utilisateur de faire lui-même cette tache de façon intuitive, sans nécessiter d'outils supplémentaire ou de travaux chez le garagiste.

Dans ce but, l'invention propose un agencement du type précédemment décrit, caractérisé en ce que le support d'accumulateurs comporte une partie amovible permettant l'accès à l'ouverture de l'organe de projection depuis le compartiment moteur pour changer les ampoules usagées en gardant le support en place.

Selon d'autres caractéristiques de l'invention :
- le support de batterie d'accumulateurs est sensiblement de forme parallélépipédique sur lequel vient se fixer un capot par le dessus de la première partie de structure formant compartiment moteur ;
- la partie amovible est constituée par au moins une face sensiblement verticale du support de batterie d'accumulateurs ;

- la partie amovible est constituée par au moins une partie de deux faces reliées entre elles par une arrête du support parallélépipédique de batterie d'accumulateurs ;
- la partie amovible du support de batterie d'accumulateurs évolue d'une position engagée vers une position dégagée par un mouvement de translation sensiblement vertical vers le haut du véhicule et est remis en position sur le support par un mouvement de translation sensiblement vertical vers le bas du véhicule ;
- la partie amovible est montée sur au moins une glissière supportée par un des montants sensiblement verticaux de la partie fixe du support d'accumulateurs de batterie ; et
- le support de la batterie d'accumulateurs comporte dans sa partie inférieure une gorge recevant le profil de la partie amovible l'ensemble assurant l'étanchéité lorsque la partie amovible est en position engagée.

La présente invention concerne en outre un procédé de changement d'une ampoule d'un organe de projection dans lequel un support de batterie d'accumulateurs est positionné à proximité derrière l'organe de projection d'un véhicule automobile, caractérisé en ce qu'il comprend les étapes suivantes :
- on ouvre le capot du véhicule ;
- on escamote le capot supérieur du support de la batterie d'accumulateur assurant l'étanchéité dudit support ;
- on fait translater la partie amovible du support de batterie dans au moins l'une des glissières des montants verticaux du support selon un mouvement sensiblement vertical ;
- on déverrouille l'ouverture de l'organe de projection depuis l'arrière de la structure transversale ;
- on change l'une des ampoules de l'organe de projection depuis l'ouverture arrière.
- on réalise l'ensemble des étapes précédentes dans l'ordre inverse pour revenir à l'état initial.

### DESCRIPTION DES FIGURES :

D'autres caractéristiques et avantages de l'invention apparaîtront à la lecture de la description détaillée qui suit laquelle est purement illustrative et non limitative et pour la compréhension de laquelle on se reportera aux dessins annexés dans lesquels :
- la figure 1 est une vue d'ensemble en perspective une première partie de structure de caisse formant compartiment moteur agencé en arrière d'une partie de structure transversale formant bouclier avant du véhicule selon l'invention ;
- la figure 2 est une vue schématique de dessus illustrant la position du support d'une batterie d'accumulateurs situé dans le compartiment moteur derrière un bouclier avant supportant un organe d'éclairage et dans laquelle le capot supérieur du support est en position enclenchée ;
- la figure 3 est une vue de détail en perspective du support de batterie dont le capot supérieur a été escamoté ;
- la figure 4 est une vue de détail en perspective du support de batterie dont une partie amovible formant cloison dudit support est en position engagée ;
- la figure 5 est une vue de détail en perspective du support de batterie dont la partie amovible formant cloison dudit support est en position dégagée ; et
- la figure 6 est une vue de détail en perspective du support de batterie accueillant la batterie elle-même représentée en silhouette et laissant apercevoir l'ouverture arrière de l'organe de projection lorsque la partie amovible est en position dégagée.

### DESCRIPTION DETAILLEE DE MODES DE REALISATION PREFERES DE L'INVENTION :

Dans la description qui va suivre, des chiffres de référence identiques désignent des pièces identiques ou ayant des fonctions similaires.

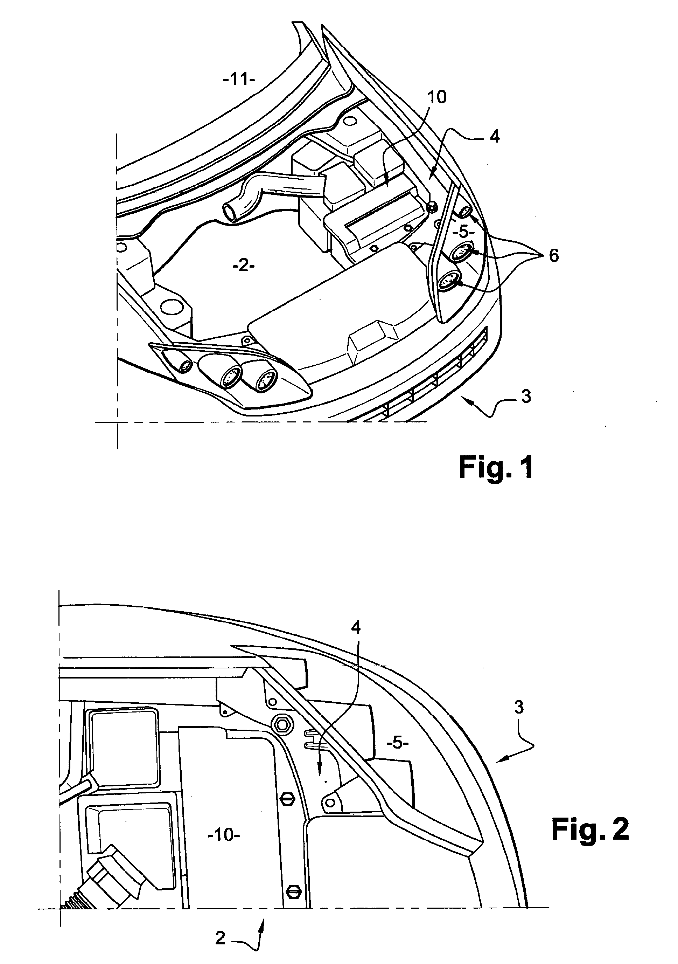

On a représenté à la figure 1 une première partie 2 de structure de caisse formant compartiment moteur. La partie 2 s'étend en avant d'une cellule 11 formant habitacle du véhicule. De manière connue, la partie 2 de structure de caisse comporte deux longerons (non représentés) sensiblement longitudinaux et parallèles supportant les différents organes du compartiment moteur 2.

De manière connue, un support de batterie 8 est relié pour partie à un des longerons et accueille une batterie 1 d'accumulateurs. Le support 8 est de forme sensiblement parallélépipédique et est couvert par un capot 10 supérieur assurant l'étanchéité du support, comme le montre la figure 2. Le support 8 assure en outre le refroidissement de la batterie en laissant un courant d'air frais parcourir l'intérieur du support 8 accueillant la batterie 1 d'accumulateurs. De cette façon, les performances de la batterie 1 sont assurées pendant les phases d'utilisation du véhicule.

La figure représente une partie du compartiment 2 moteur et d'une deuxième partie 3 de structure formant bouclier avant du véhicule. Cette seconde partie de structure 3 comporte une traverse 4 avant reliée aux deux longerons du compartiment 2 moteur. Cette traverse 4 avant supporte plusieurs organes techniques du véhicule et notamment les organes d'éclairages 5 situés généralement aux extrémités de la traverse 4. Cet organe d'éclairage 5 est équipé au moins d'un projecteur muni d'une ampoule 6 orientée vers l'avant du véhicule de façon à éclairer la route de l'utilisateur lorsque la visibilité est réduite.

La figure 2 met en avant la proximité entre les différents organes du véhicule. Cela est du à l'optimisation de l'espace du compartiment 2 moteur pour répondre au besoin croissant d'embarquer d'avantages de fonctions dans le véhicule. La présente invention se propose de répondre au problème technique qui est de permettre à l'utilisateur de changer au moins une ampoule 6 de l'organe 5 depuis le compartiment 2 moteur en laissant en place l'ensemble des dispositifs connexes.

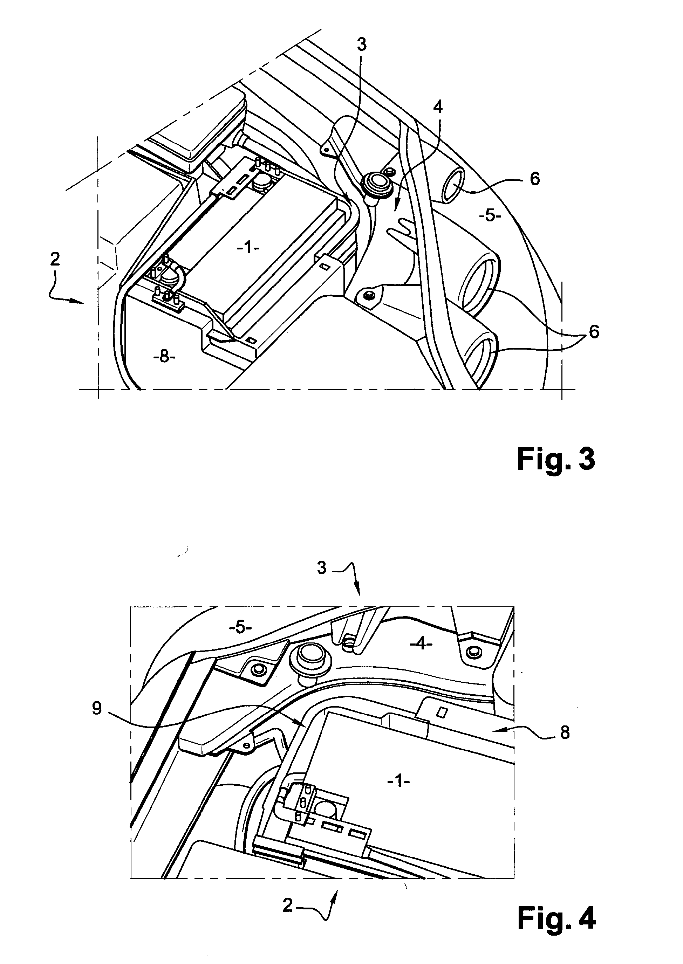

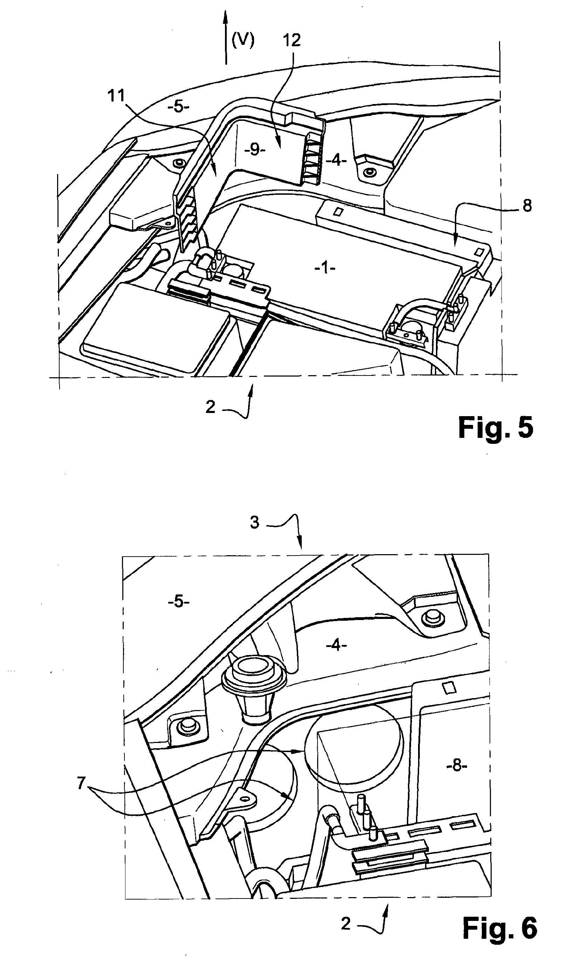

Avantageusement, la figure 3 illustre la solution technique telle que revendiquée. En effet, le support 8 comporte une batterie 1 que l'on aperçoit une fois le capot 10 supérieur escamoté. Le support 8 comporte une partie amovible 9 située sensiblement derrière les ouvertures 7 arrières de chaque projecteur telle que représentée aux figures 3, 4 et 5. Dans le mode de réalisation représenté aux figures précitées, la partie amovible 9 est reliée au support 8 par au moins une glissière (non représentée) portée par les montants sensiblement verticaux de la partie fixe du support 8. Cette liaison glissière autorise le partie amovible 9 à effectuer un mouvement sensiblement vertical selon la flèche V représentée sur la figure 5.

Selon un autre mode de réalisation, tout moyen équivalent à une liaison glissière convient pour assurer le mouvement décrit ci-dessus. L'étanchéité de support 8, au travers duquel traverse un courant d'air frais, au niveau du profil inférieur bas de la partie amovible 9 est réalisée par une gorge (non représentée) de forme complémentaire à la partie amovible 9. L'étanchéité peut être assurée par tout autre moyen équivalent pour remplir la même fonction.

La figure 6 souligne l'implantation de la partie amovible 9 dans le support 8 et sa disposition en retrait immédiat derrière l'organe 5 de projection. La figure 5 représente la batterie 1 en silhouette pour apercevoir derrière la partie amovible 9 l'ouverture 7 arrière de l'organe 5 permettant d'accéder aux ampoules des projecteurs. Une fois que la partie amovible est en position dégagée, l'utilisateur peut librement accéder aux ouvertures 7 pour effectuer les changements d'ampoules nécessaires en cas de défaillance de ces dernières.

Avantageusement, la présente invention permet de laisser en place le support de batterie pour pouvoir accéder facilement aux ouvertures 7. La forme de la partie amovible 7 est, dans le cas présent, constituée d'au moins une partie de deux faces 11 et 12 du support 8 reliées entre elles par une arrête commune. Dans d'autres modes de réalisation non représentés, la forme de la partie amovible est constituée par une seule face ou bien une partie d'une face du support 8 de façon à répondre au problème technique évoqué ci-dessus.

## Revendications

1. Agencement pour le montage d'une batterie (1) d'accumulateurs dans un véhicule automobile qui comporte une première partie (2) de structure de caisse formant compartiment moteur, du type dans lequel la première partie (2) de structure comporte au moins deux longerons sensiblement longitudinaux et parallèles et qui est agencé en arrière d'une deuxième partie (3) de structure transversale formant bouclier avant du véhicule, du type dans lequel la partie (3) de structure transversale comporte au moins une traverse (4) avant reliée aux longerons et supportant à ses extrémités un organe (5) de projection dont les ampoules (6) sont accessibles depuis le compartiment (2) moteur par au moins une ouverture (7) et dans lequel un support (8) accueillant la batterie (1) d'accumulateurs est situé en arrière de cette ouverture (7), le support (8) de batterie (1) d'accumulateurs étant sensiblement de forme parallélépipédique sur lequel vient se fixer un capot (10) supérieur par le dessus de la première partie (2) de structure formant compartiment moteur, agencement **caractérisé en ce que**, le support (8) de batterie (1) d'accumulateurs comportant une partie amovible (9) permettant l'accès à l'ouverture (7) de l'organe (5) de projection depuis le compartiment (2) moteur pour changer les ampoules (6) usagées en gardant le support (8) en place, la partie amovible (9) est constituée par au moins une face sensiblement verticale du support de batterie d'accumulateurs.

2. Agencement selon la revendication précédente, **caractérisé en ce que** la partie amovible (9) est constituée par au moins une partie de deux faces (11, 12) reliées entre elles par une arrête du support parallélépipédique de batterie (1) d'accumulateurs.

3. Agencement selon l'une des revendications précédentes, **caractérisé en ce que** la partie amovible (9) du support (8) de batterie (1) d'accumulateurs évolue d'une position engagée vers une position dégagée par un mouvement de translation sensiblement vertical (V) vers le haut du véhicule et est remis en position sur le support par un mouvement de translation sensiblement vertical vers le bas du véhicule.

4. Agencement selon l'une des revendications précédentes, **caractérisé en ce que** la partie amovible (9) est montée sur au moins une glissière supportée par un des montants sensiblement verticaux de la partie fixe du support (8) de batterie (1) d'accumulateurs.

5. Agencement selon l'une des revendications 3 et 4, **caractérisé en ce que** le support (8) de la batterie (1) d'accumulateurs comporte dans sa partie inférieure une gorge recevant le profil de la partie amovible (9), l'ensemble assurant l'étanchéité du support (8) lorsque la partie amovible (9) est en position engagée.

6. Procédé de changement d'une ampoule (6) d'un organe de projection (5) dans lequel un support (8) de batterie (1) d'accumulateurs selon les revendications précédentes est positionné à proximité derrière l'organe (5) de projection d'un véhicule automobile, **caractérisé en ce qu'**il comprend les étapes suivantes :
- on ouvre le capot du véhicule ;
- on escamote le capot (10) supérieur du support de la batterie (1) d'accumulateur assurant l'étanchéité dudit support ;
- on fait translater la partie amovible (9) du support de batterie dans au moins l'une des glissières des montants verticaux du support (8) selon un mouvement sensiblement vertical (V) ;
- on déverrouille l'ouverture (7) de l'organe (5) de projection depuis l'arrière de la structure (3) transversale ;
- on change l'une des ampoules (6) de l'organe (5) de projection depuis l'ouverture (7) arrière ;
- on réalise l'ensemble des étapes précédentes dans l'ordre inverse pour revenir à l'état initial.

## Patentansprüche

1. Anordnung für den Einbau einer Batterie (1) in ein Kraftfahrzeug, das ein einen Motorraum bildendes erstes Karosserie-Strukturteil (2) von der Art aufweist, bei der das erste Karosserie-Strukturteil (2) mindestens zwei im Wesentlichen längs und parallel verlaufende Längsträger aufweist und das hinter einem einen vorderen Stoßfänger des Fahrzeugs bildenden zweiten Querstrukturteil (3) von der Art angeordnet ist, bei der das Querstrukturteil (3) mindestens einen vorderen Querträger (4) aufweist, der mit den Längsträgern verbunden ist und an seinen Enden ein Projektionselement (5) trägt, dessen Glühbirnen (6) vom Motorraum (2) aus durch mindestens eine Öffnung (7) zugänglich sind, und wobei ein die Batterie (1) aufnehmender Träger (8) sich hinter dieser Öffnung (7) befindet, wobei der Träger (8) der Batterie (1) im Wesentlichen die Form eines Parallelepipeds hat, an dem eine obere Haube (10) von oberhalb des ersten, einen Motorraum bildenden Karosserie-Strukturteils (2) befestigt wird,
wobei die Anordnung **dadurch gekennzeichnet ist, dass**, da der Träger (8) der Batterie (1) ein entfernbares Teil (9) aufweist, das den Zugang zur Öffnung (7) des Projektionselements (5) vom Motorraum (2) aus erlaubt, um die verbrauchten Glühbirnen (6) auszuwechseln, wobei der Träger (8) an Ort und Stelle gehalten wird, das entfernbare Teil (9) aus mindestens einer im Wesentlichen senkrechten Seite des Batterieträgers besteht.

2. Anordnung nach dem vorhergehenden Anspruch, **dadurch gekennzeichnet, dass** das entfernbare Teil (9) aus mindestens einem Teil von zwei Seiten (11, 12) besteht, die durch eine Kante des parallelepipedischen Trägers der Batterie (1) miteinander verbunden sind.

3. Anordnung nach einem der vorhergehenden Ansprüche, **dadurch gekennzeichnet, dass** das entfernbare Teil (9) des Trägers (8) der Batterie (1) sich durch eine im Wesentlichen senkrechte Translationsbewegung (V) zur Oberseite des Fahrzeugs von einer eingesetzten Stellung in eine herausgezogene Stellung bewegt und durch eine im Wesentlichen senkrechte Translationsbewegung zur Unterseite des Fahrzeugs wieder auf dem Träger in Stellung gebracht wird.

4. Anordnung nach einem der vorhergehenden Ansprüche, **dadurch gekennzeichnet, dass** das entfernbare Teil (9) auf mindestens eine Gleitschiene montiert ist, die von einem der im Wesentlichen senkrechten Holme des ortsfesten Teils des Trägers (8) der Batterie (1) getragen wird.

5. Anordnung nach einem der Ansprüche 3 und 4, **dadurch gekennzeichnet, dass** der Träger (8) der Batterie (1) in seinem unteren Bereich eine Rille aufweist, die das Profil des entfernbaren Teils (9) aufnimmt, wobei die Einheit die Dichtheit des Trägers (8) gewährleistet, wenn das entfernbare Teil (9) in der eingesetzten Stellung ist.

6. Verfahren zum Auswechseln einer Glühbirne (6) eines Projektionselements (5), wobei ein Träger (8) einer Batterie (1) nach den vorhergehenden Ansprüchen in der Nähe hinter dem Projektionselement (5) eines Kraftfahrzeugs positioniert ist, **dadurch gekennzeichnet, dass** es die folgenden Schritte enthält:
- die Motorhaube des Fahrzeugs wird geöffnet;
- die obere Haube (10) des Trägers der Batterie (1), die die Dichtheit des Trägers gewährleistet, wird zurückgezogen;
- das entfernbare Teil (9) des Batterieträgers wird in mindestens einer der Gleitschienen der senkrechten Holme des Trägers (8) gemäß einer im Wesentlichen senkrechten Bewegung (V) translationsverschoben;
- die Öffnung (7) des Projektionselements (5) wird von der Rückseite der Querstruktur (3) aus entriegelt;
- eine der Glühbirnen (6) des Projektionselements (5) wird von der hinteren Öffnung (7) aus ausgewechselt;
- die Gesamtheit der vorhergehenden Schritte wird in umgekehrter Reihenfolge ausgeführt, um den Ursprungszustand wieder herzustellen.

## Claims

1. Arrangement for mounting an accumulator battery (1) in a motor vehicle which comprises a first body structure portion (2) forming an engine compartment, of the type in which the first structure portion (2) comprises at least two generally longitudinal and parallel side members and which is arranged to the rear of a second transverse structure portion (3) forming a front fender of the vehicle, of the type in which the transverse structure portion (3) comprises at least one front crossmember (4) connected to the side members and supporting at each of its ends a headlight unit (5) of which the bulbs (6) are accessible from the engine compartment (2) by at least one opening (7) and in which a compartment (8) accommodating the accumulator battery (1) is located to the rear of this opening (7), the compartment (8) for the accumulator battery (1) being generally parallelepipedic in shape, to which is attached an upper cover (10) through the top of the first structure portion (2) forming an engine compartment, **arrangement characterized in that** the compartment (8) for the accumulator battery (1) comprises a removable portion (9) allowing access to the opening (7) in the headlight unit (5) from the engine compartment (2) to change the dead bulbs (6) while keeping the compartment (8) in place the removable portion (9) is composed of at least one generally vertical face of the accumulator battery compartment.

2. Arrangement according to the preceding claim, **characterized in that** the removable portion (9) is composed of at least one portion with two faces (11, 12) connected to each other by one edge of the parallelepipedic compartment for the accumulator battery (1).

3. Arrangement according to one of the preceding claims, **characterized in that** the removable portion (9) of the compartment (8) for the accumulator battery (1) moves from an engaged position to a disengaged position by a generally vertical sliding movement (V) toward the top of the vehicle and is replaced in position on the compartment by a generally vertical sliding movement toward the bottom of the vehicle.

4. Arrangement according to one of the preceding claims, **characterized in that** the removable portion (9) is mounted on at least one slide rail supported by one of the generally vertical pillars of the fixed portion of the compartment (8) for the accumulator battery (1).

5. Arrangement according to either of Claims 3 and 4, **characterized in that** the compartment (8) for the accumulator battery (1) comprises in its lower portion a groove accepting the profile of the removable portion (9), the assembly providing the sealing of the compartment (8) when the removable portion (9) is in the engaged position.

6. Method for changing a bulb (6) of a headlight unit (5) in which a compartment (8) for an accumulator battery (1) according to the preceding claims is positioned close behind the headlight unit (5) of a motor vehicle, **characterized in that** it includes the following steps:
- open the hood of the vehicle;
- remove the upper cover (10) of the compartment for the accumulator battery (1) providing the sealing of said compartment;
- slide the removable portion (9) of the battery compartment in at least one of the slide rails of the vertical pillars of the compartment (8) with a generally vertical movement (V);
- unblock the opening (7) in the headlight unit (5) from the rear of the transverse structure (3);
- change one of the bulbs (6) in the headlight unit (5) from the rear opening (7).
- carry out all of the preceding steps in the reverse order to return to the initial state.
